# FASCICULE DE BREVET EUROPEEN

(11) **EP 3 638 052 B1**
(45) Date de publication et mention de la délivrance du brevet: **17.12.2025**
(21) Numéro de dépôt: 18756266.5
(22) Date de dépôt: 15.06.2018
(51) Int. Cl.: A23L 2/02, A23B 70/00, A23L 17/60, A23L 2/52

(54) **PROCÉDÉ D'OBTENTION D'UNE BOISSON ALIMENTAIRE STABILISÉE À BASE DE JUS DE FRUITS COMPRENANT DES EXTRAITS DE MICROALGUES ET/OU DES CYANOBACTÉRIES**
VERFAHREN ZUR HERSTELLUNG EINES STABILISIERTEN LEBENSMITTELGETRÄNKS AUS FRUCHTSAFT MIT EXTRAKTEN VON MIKROALGEN UND/ODER CYANOBAKTERIEN
METHOD FOR OBTAINING A STABILISED FOOD DRINK MADE FROM FRUIT JUICE COMPRISING EXTRACTS OF MICROALGAE AND/OR CYANOBACTERIA

(30) Priorité: 15.06.2017 FR 1770628
(43) Date de publication de la demande: 22.04.2020
(73) Titulaire: Algama, 91000 Evry (FR)
(72) Inventeur: PECQUET, Maxime, 75005 Paris (FR); FELICE, Thomas, 92140 Clamart (FR); GONCALVES ALVES, Mathieu, 75009 Paris (FR)
(74) Mandataire: Touroude, Magali Linda
(86) Numéro de dépôt international: PCT/FR2018/000173
(87) Numéro de publication internationale: WO 2018/229365

(56) Documents cités:
- WO-A1-2013/081194
- WO-A1-2016/099261
- WO-A1-2017/050918
- US-A- 4 400 400

## Description

La présente invention se rapporte au domaine de la valorisation de la biomasse notamment de la biomasse algale, plus précisément la présente invention a pour objet un procédé d'obtention d'une boisson alimentaire qui se conserve et qui maintient sa couleur bleu plus de 6 mois, de pH acide, de préférence à base de jus de fruits, comprenant des extraits de microalgues eucaryotes ou procaryotes (cyanobactéries), ainsi que la boisson alimentaire stabilisée obtenue par ce procédé.

Afin de faire face à l'augmentation de la demande alimentaire mondiale, de nombreux industriels s'orientent vers des ressources alternatives telles que les microalgues. Ces microorganismes, d'une grande biodiversité, représentent une source de biomasse unique. Leur production se différencie de celle des plantes maraichères et céréalières, cultivées sur des terres arables, par leur rendement surfacique très élevé.

Cultivées depuis plus de 30 ans, les microalgues constituent un produit alimentaire à part entière. En nutrition humaine et animale, deux approches de valorisation existent : la première consiste à viser une consommation de la microalgue entière, la deuxième concerne l'extraction, la transformation et le conditionnement de molécules bioactives issues de celles-ci. En France, seules trois espèces de microalgues sont autorisées pour une consommation humaine sans transformation et détiennent des propriétés nutritionnelles exceptionnelles : la spiruline ou Arthrospira platensis, la microalgue verte Chlorella et la diatomée Odontella aurita. Ces micro-organismes s'annoncent comme des éléments majeurs dans l'enjeu de l'alimentation mondiale, grâce à leur teneur unique en protéines et au faible impact environnemental de leur production : faible consommation en eau et en énergie.

En particulier, la spiruline a ainsi attiré, ces dernières années, l'attention d'un grand nombre de chercheurs et d'industriels. Elle est déjà très répandue sur le marché sous la forme séchée non transformée, pour sa consommation en tant que complément alimentaire.

La spiruline contenant un grand nombre de composés d'intérêt à forte valeur ajoutée, de nombreux chercheurs et industriels se sont intéressés à l'extraction de composés d'intérêt à partir de cette cyanobactérie. La biomolécule usuellement extraite à partir de la spiruline est la phycocyanine (PC), protéine pigmentaire bleue à activité antioxydante, représentant 20 % de son poids sec (Vonshak, 1997). Cet intérêt grandissant pour la phycocyanine s'explique notamment par son pouvoir colorant. Actuellement, les colorants alimentaires bleus utilisés en France sont synthétiques : bleu patenté V et bleu brillant ; ils figurent souvent parmi les ingrédients des bonbons et boissons... Le bleu patenté V serait à l'origine d'une amplification de l'hyperactivité chez les enfants et pourrait constituer un potentiel allergène, c'est pourquoi il a récemment été interdit aux Etats Unis, Canada et Australie. De ce fait, une attention particulière a été portée sur l'usage de colorants naturels, et en particulier de la phycocyanine.

Les composés hydrosolubles extraits des microalgues et cyanobactéries, et en particulier la phycocyanine, présentent d'importante contrainte si l'on souhaite l'incorporer dans une boisson à pH acide tel qu'un jus de fruit et conserver cette boisson stable pendant une durée minimum de 6 mois. Par stable, on entend :
Stabilité physico-chimique de la formule qui conserve son homogénéité et sa couleur au cours du temps.
Stabilité des caractéristiques organoleptiques de la formule notamment en empêchant le développement d'une flore d'altération
Stabilité sanitaire de la formule notamment en empêchant le développement d'une flore pathogène pour l'homme.

Les principales technologies aujourd'hui disponibles chez les producteurs de boisson mettent en jeu un système de traitement thermique ou de filtration à 0,2 micromètre.

Les composés hydrosolubles extraits des microalgues et cyanobactéries, et en particulier la phycocyanine est une molécule possédant des contraintes importantes :
Elle se dégrade pour une température supérieure à 45°C
Elle se dégrade pour un pH inférieur à 3,8
Plus le pH de la solution diminue, plus la phycocyanine est sensible à la chaleur.

Plus le pH de la solution diminue, plus la phycocyanine colmate rapidement les filtres d'une porosité inférieur à 4 micromètres.

Il est donc impossible d'utiliser un procédé standard de pasteurisation ou de filtration sur la boisson tels qu'il se présente actuellement dans l'industrie agro-alimentaire de la boisson.

Les documents WO2016099261, WO2013081194, WO2017050918 et US4400400 décrivent des procédés d'obtention de boissons acides contenant un extrait de microalgues, et soumises à un procédé de pasteurisation pour allonger leur conservation.

Ainsi les boissons actuellement disponibles sur le marché et comprenant de la phycocyanine ne sont pas stables sur une durée de 12 mois, avec un développement bactérien les rendant rapidement impropres à la consommation, ou une dégradation de la phycocyanine altérant notablement leur couleur.

Afin d'augmenter la stabilité de leurs boissons comprenant de la phycocyanine, les industriels de l'agro-alimentaire ont développé des procédés incluant l'ajout de conservateurs et de dioxyde de carbone dans la boisson ce qui renforce la stabilité de la boisson mais la rend pétillante, ce qui n'est pas du goût de nombreux consommateurs. Il n'existe donc pas à ce jour de procédé permettant d'obtenir une boisson à pH acide, comprenant de la phycocyanine, de longue conservation, en particulier à température ambiante, et non pétillante.

Le Titulaire a aujourd'hui mis un point un nouveau procédé d'obtention d'une boisson alimentaire qui se conserve et qui maintient sa couleur bleu plus de 6 mois à température ambiante, de préférence plus de 12 mois, de pH acide, de préférence à base de jus de fruits, comprenant des extraits de microalgues eucaryotes ou procaryotes (cyanobactéries), et/ou des composés hydrosolubles purifiés extraits à partir de microalgues eucaryotes ou procaryotes (cyanobactéries) tel que la phycocyanine, sans nécessité d'adjonction de conservateurs, ni de dioxyde de carbone, la boisson ainsi obtenue pouvant donc être plate.

Ainsi un premier objet de la présente invention concerne un procédé d'obtention d'une boisson alimentaire qui se conserve et qui maintient sa couleur bleu plus de 6 mois à température ambiante, de préférence plus de 12 mois, de pH acide, de préférence à base de jus de fruits, comprenant de la phycocyanine extraite de spiruline ledit procédé comprenant au moins
a) une étape de mélange de la phycocyanine extraite de spiruline avec les ingrédients de la boisson sensibles aux traitements thermiques, ledit mélange étant maintenu à un pH supérieur à 7,
b) une étape optionnelle de mélange des ingrédients de la boisson insensibles aux traitement thermiques avec le ou les ingrédients de pH acide, de préférence le jus de fruit,
c) une étape de stérilisation par microfiltration du mélange obtenu à l'étape a)
d) une étape de stérilisation par microfiltration ou traitement thermique du mélange obtenu à l'étape b) ou de l'ingrédient de pH acide, de préférence le jus de fruit,
e) une étape d'homogénéisation des mélanges stérilisés obtenus aux étapes c) et d), ledit mélange stérilisé obtenu à l'étape c) étant de préférence ajouté avant le mélange stérilisé obtenu à l'étape d),
f) obtention d'une boisson qui se conserve et qui maintient sa couleur bleu plus de 6 mois à température ambiante, de pH acide, comprenant de la phycocyanine extraite de spiruline.

De manière préférée, à l'étape e), le mélange de l'étape c) est ajouté avant le mélange stérilisé obtenu à l'étape d) afin de ne pas plonger directement le mélange c) qui est pH-sensible dans le mélange d) qui est une solution acide. Ceci pourrait provoquer une précipitation de composés hydrosolubles extraits de microalgues eucaryotes ou procaryotes (cyanobactéries).

De manière particulièrement préférée, à l'étape e), dans le cas où le pH du mélange stérilisé obtenu à l'étape d) est proche de celui de la boisson finale, ce mélange stérilisé obtenu à l'étape d) peut être ajouté avant ou après le mélange de l'étape c), car le risque de précipitation de composés hydrosolubles extraits de microalgues eucaryotes ou procaryotes (cyanobactéries) n'existe plus.

Par microalgues, on entend désigner selon la présente invention les microalgues eucaryotes, qui sont caractérisée par une paroi cellulaire et un noyau, comprenant les chlorophytes, les chrysophytes et les pyrrophytes, lesdits microalgues eucaryotes étant communément dénommées « microalgues », et les microalgues procaryotes, qui ne possèdent pas de noyau et de paroi cellulaire, comprenant les cyanophytes, ci-après dénommées spécifiquement « cyanobactéries ».

Dans le cadre de l'invention est utilisé de la phycocyanine de spiruline.

Par composés hydrosolubles, on entend désigner selon la présente invention des composés solubles dans l'eau et contenus dans les microalgues, de préférence choisi parmi les protéines et peptides, les vitamines hydrosolubles, de préférence les vitamines du groupe B (en particulier Thiamine (B1), Riboflavine (B2), Niacine (B3), Acide pantothénique (B5), pyridoxine (B6), Biotine (B8), Folate (B9), Cobalamine (B12)), les minéraux, de préférence le sodium, le calcium, le potassium, le magnésium et le fer, la C-phycocyanine (ou phycocyanine), et la chlorophylle.

De manière préférée selon l'invention, le composé hydrosoluble est la phycocyanine Par longue conservation on entend selon la présente invention une conservation de plus de 6 mois, de préférence de plus de 12 mois.

Par température ambiante on entend selon la présente invention une température de 25°C.

Par pH acide, on entend un pH inférieur à 7. De préférence le pH final de la boisson est compris entre 3 et 5, de préférence entre 3,5 et 4,5, de manière encore préférée entre 3,8 et 4,2.

Par jus de fruits on entend selon la présente invention du jus de fruit naturel ou du jus de fruit concentré, de préférence reconstitué dans de l'eau. Les fruits peuvent être choisis parmi tous les fruits utilisables pour l'alimentation humaine tels que l'orange, la pomme, le raison, l'ananas, la mangue, la poire la pêche, l'abricot, la goyave, la fraise, les fruits rouges, la banane, la framboise, la canneberge, le kiwi, de préférence l'orange.

Par ingrédients de la boisson sensibles aux traitements thermiques, on entend selon la présente invention les ingrédients que l'Homme du métier connaît de ses connaissances générales comme pouvant être classiquement incorporées dans un produit alimentaire, tel que des arômes, des vitamines. Ces ingrédients, ainsi que les extraits de microalgues eucaryotes ou procaryotes (cyanobactéries) et/ou des composés hydrosolubles purifiés extraits à partir de microalgues eucaryotes ou procaryotes (cyanobactéries) peuvent se présenter sous la forme de poudres qui seront dilués dans de l'eau lors de la l'étape de mélange, ou encore sous une forme liquide fortement concentrée et stabilisée.

Par stérilisation par microfiltration, on entend selon la présente invention une filtration effectuée de manière frontale ou tangentielle, avantageusement sur filtre alimentaire, par exemple en polyamide, notamment en nylon, avec une finesse inférieure à 0,5 microns . Une étape de préfiltration peut être réalisée sur un filtre de 2 à 50 microns, de préférence inférieure à 25 microns. De préférence, la filtration s'effectue à débit constant, de préférence sur moins de 75% du volume de boisson finale, de manière plus préférée sur moins de 25%, de manière encore plus préférée sur moins de 5%, de manière encore plus préférée sur moins de 2%.

Le mélange selon la présente invention est effectué de préférence dans des cuves de mélange, à l'aide d'un mixeur plongeant, un batteur-mélangeur, une cuve d'homogénisation, une pompe pneumatique.

De manière préférée selon l'invention, le procédé comprend une étape supplémentaire d'embouteillage de la boisson obtenue. De manière préférée, l'étape d'embouteillage est réalisée en condition aseptique.

De manière préférée selon l'invention, les extraits de microalgues eucaryotes ou procaryotes (cyanobactéries) et/ou des composés hydrosolubles purifiés extraits à partir de microalgues eucaryotes ou procaryotes (cyanobactéries) représentent entre 0,01 et 10 % en poids de la boisson, de préférence entre 0,01 et 1% en poids de la boisson, de préférence entre 0,01 et 0,02% en poids de la boisson.

De manière préférée selon l'invention, le procédé comprend en plus une étape g) de conservation de ladite boisson obtenue, dans l'obscurité, pendant 24h à 7 jours, de préférence 48 h.

Par « obscurité » est entendu que la conservation de ladite boisson obtenue selon l'invention est réalisée en absence de lumière. Cette conservation dans l'obscurité permet d'améliorer la conservation de la phycocyanine, dont un indicateur est la persistance de son spectre d'absorption à 620 nm. De préférence la conservation dans l'obscurité se fait à température ambiante

De manière préférée selon l'invention, l'étape de conservation de ladite boisson dans l'obscurité permet de conserver 50%, de préférence 75%, de manière encore préférée 90% du spectre d'absorption à 620 nm de la phycocyanine, 7 jours après embouteillage (stockage à l'obscurité et température ambiante).

Selon un deuxième aspect, l'invention concerne une boisson alimentaire de longue conservation à température ambiante, de préférence plus de 6 mois, de pH acide, de préférence à base de jus de fruits telle qu'obtenue par le procédé selon l'une quelconque des revendications précédentes renfermant des extraits de microalgues eucaryotes ou procaryotes (cyanobactéries) et/ou des composés hydrosolubles purifiés extraits à partir de microalgues eucaryotes ou procaryotes (cyanobactéries).

De manière préférée selon l'invention, la boisson selon l'invention est plate. Par plate on entend non-gazeuse.

De manière préférée selon l'invention, la boisson obtenue par le procédé selon la présente invention est une boisson stabilisée. Par boisson stabilisée, on entend selon la présente invention une boisson dont les niveaux microbiologiques pour la flore d'altération non pathogène restent au-dessous des seuils cibles :
En sortie de production
   < 10 UFC/ml Flore mésophile totale
   < 10 UFC/ml Flore anaérobique totale
   < 10 UFC/ml Bactérie lactiques
   < 10 UFC/ml levures/moisissures
En fin de DLUO
   < 200 UFC/ml Flore mésophile totale
   < 200 UFC/ml Flore anaérobique totale
   < 200 UFC/ml Bactérie lactiques
   < 200 UFC/ml levures/moisissures

On décrira maintenant, à titre d'exemple non limitatif, un mode de réalisation de l'invention

### EXEMPLE :

Composition de la boisson :
Mélange a)

| **Ingrédients** | **Quantités pour 1000 kg** |
|---|---|
| Eau osmosée | QSP |
| Extrait de spiruline (phycocyanine purifiée) | 270g |
| Magnésium | 1,3kg |
| Maltodextrine | 350g |
| Vitamine B2 | 100g |
| Vitamine B12 | 2g |
| Sorbate de potassium | 340 g |
| Benzoate de sodium | 200g |

Mélange b)

| **Ingrédients** | **Quantités pour 1000 kg** |
|---|---|
| Eau osmosée | 953 kg |
| Jus d'orange concentré | 47 kg |

### 2 Matériel

### 2.1 Matériel pour la préparation du mélange

Pour le mélange b), à base de jus d'orange, sa préparation a consisté à la dilution du jus d'orange concentré. Pour cela, un mixeur plongeant a été utilisé directement dans une cuve de 1 m3

Pour le mélange a), comprenant de l'extrait de microalgues, la préparation nécessite des mélanges de poudre, des dissolutions de poudre dans l'eau. Pour cela, différents matériels ont pu être utilisés avant la cuve de 1 m3 : le mixeur plongeant, un batteur - mélangeur de 20L, une cuve d'homogénéisation (100L), une pompe pneumatique en circuit fermé sur la cuve de préparation.

### 2.2 Le montage de filtration frontale

Le montage est constitué d'une cuve (1 m3) contenant le mélange à filtrer, une pompe et le carter de filtration (avec sa cartouche filtrante). La cuve est re-remplie lors de l'essai (par transfert d'une autre cuve à l'aide d'une pompe pneumatique). Une vanne en amont du carter
peut ajuster le débit de filtration (pour le garder constant). La bouteille d'azote est utilisée lors des tests d'intégrité

### 2.3 Le carter et les cartouches filtrantes

Le carter utilisé est un carter Pall sanitaire série FBT équipé de cartouche 10". Les cartouches utilisées sont des cartouches Fuente II, réf. AB1FFN7WH4 : ce sont des cartouches en polyethersulfone, plissées (plissage Ultipleat^{®} double couche), avec un seuil de filtration de 0,2 µm grade stérilisant. Elles possèdent le certificat d'aptitude au contact agro-alimentaire. Chaque cartouche de 10" a une surface filtrante de 1,04 m2.

### 3. Methode

### 3.1 Mélange b) = à base de jus d'orange

Pour la réalisation du mélange b), à base de jus d'orange, le jus d'orange concentré 47 kg, a été versé dans la cuve remplie au ¾ d'eau. La cuve a ensuite été complétée avec de l'eau jusqu'à avoir une masse de 1000 kg. Enfin, le mélange a été homogénéisé avec le mixeur plongeant. Le mélange a été transféré de la cuve de préparation à la cuve d'alimentation du montage par une pompe pneumatique.

### 3.2 Mélange a) = contenant l'extrait de microalgues

Le mélange des 3 premiers produits poudres a été réalisé à sec dans le mélangeur-batteur. Puis, une partie de ce mélange poudre (400-500 g) a été versé lentement dans le vortex d'un bac contenant 5-6 L d'eau ; l'agitation (par le mixeur plongeant) a été maintenue une quinzaine de minutes. Ce mélange concentré est ensuite versé dans la cuve de 1m3 remplie au trois quart d'eau et cette cuve a été agitée à nouveau avec le mixeur plongeant. Les autres produits poudre ont été d'abord mélangés dans de l'eau (dans le vortex) de manière concentrée, puis ajoutés dans la cuve de 1 m3. Les produits liquide ont été directement ajoutés dans la cuve de 1 m3. Après ajout de tous les produits, la cuve de 1 m3 a été homogénéisée avec le mixeur plongeant et également par circulation en circuit fermé à l'aide d'une pompe.

### 3.3. Stérilisation par microfiltration des mélanges

Chaque mélange a) puis b) est microfiltré (une nouvelle cartouche par chaque mélange est utilisée) avec les résultats suivants :

| | Mélange b) | Mélange a) |
|---|---|---|
| Pression (bar) | 2 | 2,46 |
| Débit de filtration (kg/h/m2) | 769 (constant) | 770 |
| Masse filtrée (kg/m3) | 1920 | 790 |
| Filtrat | PH 4 | pH8,6, turbidité 36 NTU, absorbance (620 nm) : 0,388 |

### 3.4 : Homogénéisation des mélanges a) et b)

Les mélanges a) et b) stérilisés à l'étape 3.3 sont mélangés et homogénisés dans une cuve de 2m2 à l'aide d'un système d'agitation à pâle inclinée.

Le mélange a) est ajouté en premier dans la cuve d'homogénisation

## Revendications

1. Procédé d'obtention d'une boisson alimentaire qui se conserve et qui maintient sa couleur bleu plus de 6 mois à température ambiante, de pH acide, de préférence à base de jus de fruits, comprenant de la phycocyanine extraite de spiruline, **caractérisé en ce que** ledit procédé comprend au moins
a. une étape de mélange de la phycocyanine extraite de spiruline avec les ingrédients de la boisson sensibles aux traitements thermiques, ledit mélange étant maintenu à un pH supérieur à 7,
b. une étape optionnelle de mélange des ingrédients de la boisson insensibles aux traitement thermiques avec le ou les ingrédients de pH acide, de préférence le jus de fruit,
c. une étape de stérilisation par microfiltration du mélange obtenu à l'étape a)
d. une étape de stérilisation par microfiltration ou traitement thermique du mélange obtenu à l'étape b) ou de l'ingrédient de pH acide, de préférence le jus de fruit,
e. une étape d'homogénéisation des mélanges stérilisés obtenus aux étapes c) et d), ledit mélange stérilisé obtenu à l'étape c) étant de préférence ajouté avant le mélange stérilisé obtenu à l'étape d),
f. obtention d'une boisson qui se conserve et qui maintient sa couleur bleu plus de 6 mois à température ambiante, de pH acide, comprenant de la phycocyanine extraite de spiruline.

2. Procédé selon la revendication précédente **caractérisé en ce que** la boisson est à base de jus de fruits, l'ingrédient acide étant du jus de fruit naturel ou concentré.

3. Procédé selon l'une quelconque des revendications précédentes **caractérisé en ce qu'**il comprend une étape supplémentaire d'embouteillage en condition aseptique de la boisson obtenue.

4. Procédé selon l'une quelconque des revendications précédentes **caractérisé en ce que** la phycocyanine extraite de spiruline représente entre 0,01 et 1 % en poids de la boisson, de préférence entre 0,01 et 0,5% en poids de la boisson, de préférence entre 0,01 et 0,02% en poids de la boisson.

5. Procédé selon l'une quelconque des revendications précédentes, **caractérisé en ce qu'**il comprend en plus une étape g) de conservation de ladite boisson obtenue, dans l'obscurité, pendant 24h à 7 jours.

## Patentansprüche

1. Verfahren zur Herstellung eines Nahrungsmittelgetränks, das bei Raumtemperatur länger als 6 Monate haltbar ist, seine blaue Farbe behält, einen sauren pH-Wert aufweist und vorzugsweise auf Fruchtsaftbasis ist, umfassend aus Spirulina extrahiertes Phycocyanin, **dadurch gekennzeichnet, dass** das Verfahren mindestens umfasst:
a. einen Schritt des Mischens des aus Spirulina extrahierten Phycocyanins mit den gegenüber Wärmebehandlung empfindlichen Inhaltsstoffen des Getränks, wobei die Mischung bei einem pH-Wert von über 7 gehalten wird,
b. einen optionalen Schritt des Mischens der gegenüber Wärmebehandlung beständigen Inhaltsstoffe des Getränks mit dem/den Inhaltsstoff(en) mit saurem pH-Wert, vorzugsweise Fruchtsaft,
c. einen Schritt des Sterilisierens durch Mikrofiltration der in Schritt a) erhaltenen Mischung
d. einen Schritt des Sterilisierens durch Mikrofiltration oder Wärmebehandlung der in Schritt b) erhaltenen Mischung oder des Inhaltsstoffs mit saurem pH-Wert, vorzugsweise Fruchtsaft,
e. einen Schritt des Homogenisierens der in den Schritten c) und d) erhaltenen sterilisierten Mischungen, wobei die in Schritt c) erhaltene sterilisierte Mischung vorzugsweise vor der in Schritt d) erhaltenen sterilisierten Mischung zugegeben wird,
f. Herstellen eines Getränks, das bei Raumtemperatur über 6 Monate haltbar ist und seine blaue Farbe behält, einen sauren pH-Wert aufweist und das aus Spirulina extrahiertes Phycocyanin enthält.

2. Verfahren nach dem vorhergehenden Anspruch,
**dadurch gekennzeichnet, dass** das Getränk auf der Basis von Fruchtsaft hergestellt wird, wobei der saure Inhaltsstoff natürlicher oder konzentrierter Fruchtsaft ist.

3. Verfahren nach einem der vorhergehenden Ansprüche,
**dadurch gekennzeichnet, dass** es einen zusätzlichen Schritt des Abfüllens des erhaltenen Getränks unter aseptischen Bedingungen umfasst.

4. Verfahren nach einem der vorhergehenden Ansprüche,
**dadurch gekennzeichnet, dass** das aus Spirulina extrahierte Phycocyanin zwischen 0,01 und 1 Gew.-% des Getränks, vorzugsweise zwischen 0,01 und 0,5 Gew.-% des Getränks, vorzugsweise zwischen 0,01 und 0,02 Gew.-% des Getränks ausmacht.

5. Verfahren nach einem der vorhergehenden Ansprüche,
**dadurch gekennzeichnet, dass** es ferner einen Schritt g) des Haltbarmachens des erhaltenen Getränks 24 Stunden bis 7 Tage lang im Dunkeln umfasst.

## Claims

1. Process for obtaining a food drink which keeps well and which maintains its blue color for more than 6 months at ambient temperature, has an acid pH, is preferably based on fruit juice, and comprises phycocyanin extracted from spirulina, **characterized in that** said process comprises at least
a. a step of mixing the phycocyanin extracted from spirulina with the ingredients of the drink that are sensitive to heat treatments, said mixture being maintained at a pH above 7,
b. an optional step of mixing the ingredients of the drink that are insensitive to heat treatment with the ingredient(s) having an acid pH, preferably the fruit juice,
c. a step of sterilizing the mixture obtained in step a) by means of microfiltration,
d. a step of sterilizing the mixture obtained in step b) or the ingredient having an acid pH, preferably the fruit juice, by means of microfiltration or heat treatment,
e. a step of homogenizing the sterilized mixtures obtained in steps c) and d), said sterilized mixture obtained in step c) preferably being added before the sterilized mixture obtained in step d),
f. obtaining a drink which keeps well and which maintains its blue color for more than 6 months at ambient temperature, has an acid pH, and comprises phycocyanin extracted from spirulina.

2. Process according to the preceding claim, **characterized in that** the drink is based on fruit juice, the acidic ingredient being natural or concentrated fruit juice.

3. Process according to any of the preceding claims, **characterized in that** it comprises an additional step of bottling the obtained drink under aseptic conditions.

4. Process according to any of the preceding claims, **characterized in that** the phycocyanin extracted from spirulina represents between 0.01 and 1 wt.% of the drink, preferably between 0.01 and 0.5 wt.% of the drink, preferably between 0.01 and 0.02 wt.% of the drink.

5. Process according to any of the preceding claims, **characterized in that** it additionally comprises a step g) of storing said obtained drink, in darkness, for 24 hours to 7 days.
